# EUROPEAN PATENT SPECIFICATION

(11) **EP 3 720 165 B1**
(45) Date of publication and mention of the grant of the patent: **18.11.2026**
(21) Application number: 19166432.5
(22) Date of filing: 30.03.2019
(51) Int. Cl.: H04W 12/06, H04L 9/40, H04W 12/069, H04W 12/03, H04L 9/32

(54) **METHOD FOR PROVING AT LEAST ONE OF IDENTITY AND ENTITLEMENT**
VERFAHREN ZUM NACHWEIS VON MINDESTENS EINEM VON IDENTITÄT UND BERECHTIGUNG
PROCÉDÉ POUR FOURNIR AU MOINS UN D' IDENTITÉ ET DE DROIT

(43) Date of publication of application: 07.10.2020
(73) Proprietor: Illotros GmbH, 8044 Zürich (CH)
(72) Inventor: Gaschen, Dominique, 3088 Rüeggisberg (CH); Monneron, Yvan, 3172 Niederwangen (CH); Schilliger, Jan, 3147 Mittelhäusern (CH); Suter-Dörig, Benjamin Andris, 3084 Wabern (CH); Störzbach, Pascal, 3084 Wabern (CH)
(74) Representative: Störzbach, Michael Andreas

(56) References cited:
- WO-A1-2017/055716
- US-A1- 2010 161 965
- US-A1- 2016 028 548
- US-A1- 2017 111 170
- US-A1- 2018 063 123
- US-B1- 8 868 923

## Description

The present invention generally relates to the field of authentication and/or authorization protocols, for example, in the field of VPNs (virtual private network), **in particular to providing entitlements to a first entity.**

An authentication protocol is a type of computer communications protocol or cryptographic protocol specifically designed for transfer of authentication data between two entities. An authorization protocol is a type of computer communications protocol or cryptographic protocol specifically designed for controlling access rights of certain entities to certain services.

Entities trying to access ("connecting entities") a restricted service (e.g. a paid VPN service) or trying to prove a certain entitlement to another entity ("authenticating entities"), may use authentication to prove entitlement to access a service or prove the identity claimed.

Every entity has unique identifying factors "ground truth", such as but not limited to name, address, location, e-mail address, ownership, payment method, bank details, ID-number, unique identifier, user name, password, ... that are known to the authenticating authority or that the authenticating authority may have access to.

Authentication between entities is often based on one or more unique factors, such as but not limited to physical hardware (card, device, ...), personal factors (fingerprint, retina, ...), knowledge factors (username, security token, PIN number, password). While authentication using unique factors may be very secure with respect to fraud or abuse (e.g. an entity passing off as a different entity), unique factors are usually tied to the ground truth of the entity. Therefore, the authenticating entity knows some of the ground truth about the connecting entity in the authentication process. Using universal authentication factors (e.g. all entities share a common password) on the other hand may untie the ground truth from the authentication factors but are not secure with respect to fraud or abuse. For example, an entity may easily share/leak/lose the universal factors and thus enable a large number of unauthorized third parties to pass the authentication procedure.

US2017111170A describes a method for authentication between a server and a connected device through a challenge encrypted using asymmetric encryption. Importantly in this method, the encrypted challenge is relayed through an additional server and the challenge is generated in real time, as opposed to in advance.

WO2017055716A describes a method for managing access right to a device in an environment where a connection of the accessing device to the authorizing authority cannot be established. A token previously generated by the authorizing authority and containing the access rights is used to prove the entitlement to connect to the device. Extended validity even without access to the authorizing entity is secured by a 2nd encryption, and the two times encrypted entitlement is stored by the client device. In order to be used, the 2nd encryption layer has to be removed by decryption requiring the availability of the respective key - the private key in case of an asymmetric method. This key shall, however, be stored on a personal device, i.e. must be provided by the owner of the client device so that only the person being actually entitled can use the entitlement, and losing the client device does not constitute a risk of abuse.

Beside other aspects, both prior art methods share the feature that the entity furnishing the entitlement is aware of the identity of the requestor.

US2010/161965A discloses a store for secure storage of credentials. For retrieving credentials, a user must authenticate herself, i.e. her identity and the relationship with the requested credentials is known to the store.

US2018063123A relates to a method for supplying encrypted credentials to a client. It uses public/private key encryption for safe transfer of credentials and relies on the capability that only the authorized requesting Host has the private Key to decrypt the encrypted credential.

Neither of the two publications deals with the aspect of anonymous yet safe furnishing of entitlements, e.g. to use a service.

Accordingly, a primary object of this present invention is to better untie the authenticating factors from the ground truth, while limiting the risk for the authenticating authority of a large number of unauthorized third parties passing the authentication procedure. Moreover, the authenticating factors are changed periodically to limit the ability of the authenticating entity tying together requests from a connecting entity over longer time periods. Additionally, entitled connecting entities can pass the authentication procedure independently from platform/device without the need to disclose any of the ground truths in the authentication procedure.

Such a method is defined in claim 1. The further claims define preferred embodiments of the method.

In order to achieve the objective mentioned above, the present invention provides an authentication protocol based on asymmetric cryptographic methods, where a connecting entity is in the possession of one or more secret/private keys, of which the corresponding public/shared keys rest with the authenticating entity. Periodically, unique access tokens are created and encrypted using the public/shared keys resting with the authenticating entity and distributed to the respective connecting entities. The connecting entities decrypt the received encrypted access token using the private/secret keys and may pass the authentication procedure by providing the unique access token.

It is to be understood that both the foregoing general description and the following detailed description are exemplary and are intended to provide further explanation of the invention as claimed. Other advantages and features of the invention will be apparent from the following description and drawings and claims.

The features of the invention believed to be novel are set forth with particularity in the appended claims. The invention itself, however, may be best understood by reference to the following detailed description of the invention, which describes an exemplary embodiment of the invention, taken in conjunction with the accompanying drawings, in which:
- Fig. 1 represents the process of generating a key pair,
- Fig. 2 shows a preferred embodiment with multiple users sharing their entitlement with the authenticating entity,
- Fig. 3 shows a preferred embodiment in which the authenticating entity encrypts new tokens for the time interval *[t, t* + Δt],
- Fig. 4 shows the preferred embodiment of a user requesting access to the server, thus receiving the encrypted, valid token associated with its public/shared key from the authenticating entity,
- Fig. 5 shows the preferred embodiment of the user decrypting the received token and sending it to the authenticating entity to pass the authentication step, and
- Fig. 6 is a flowchart showing a sample authentication procedure including from the initial request to accessing the service of the connecting entity up to the successful passing of the authentication process.
- Fig. 7 is a flowchart showing the process in which the authenticating entity encrypts new tokens for the time interval *[t, t* + Δt].

### Preferred embodiment of the invention

In cooperation with attached drawings, the technical contents and detailed description of the present invention are **presented** thereinafter according to a **preferred** embodiment, being not used to limit its executing scope. Any equivalent variation and modification made according to the appended claims is covered by the claims.

Reference will now be made to the Figures to describe **the preferred embodiment of the** present invention in detail.

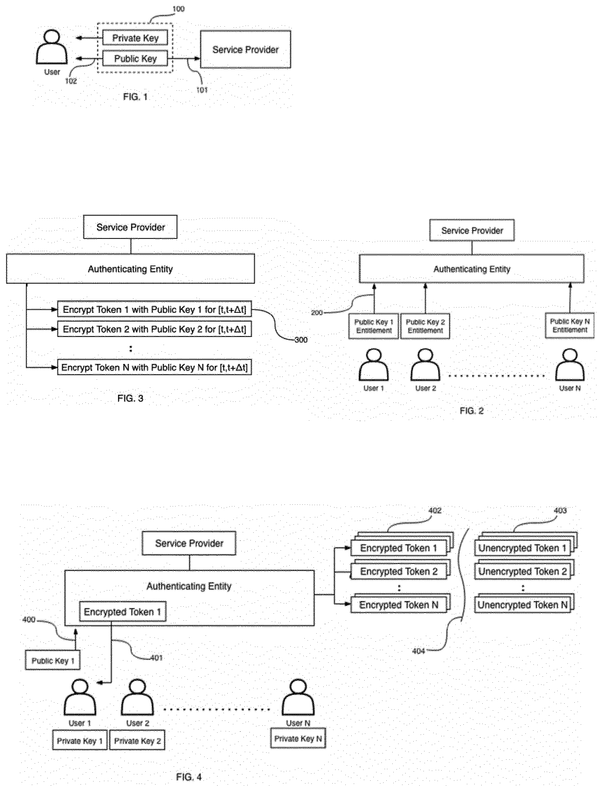

Reference is made to Fig. 1, which is a schematic view of a connecting entity (e.g. a VPN user) creating at least one key pair comprising a private/secret key and a corresponding shared/public key, using an asymmetrical encryption method, such as but not limited to RSA/ECDH (100). The process of creating a new key pair has to be performed at least once. Key pairs may expire or may have to be revoked (e.g. because of leaks or advancements in attacks against the chosen encryption method), in which case the process of generating key pair(s) is repeated. The created public/shared key(s) is/are shared with the authenticating entity or service provider (e.g. API server, VPN server) (101). Both the secret/private and the public/shared key(s) rest with the user (102).

Reference is made to Fig. 2, which shows connecting entities (users) with valid key pairs, sharing the entitlement for using a service together with the public/shared key with the authenticating entity (200). Through this process the authenticating entity knows which public/shared keys are entitled to pass the authentication process. The authenticating entity may delete the received entitlements upon verification or may encrypt them using the corresponding public/shared key.

Reference is made to Fig. 3, which shows the authenticating entity creating at every time step one or more possibly unique tokens for one or more public/shared key(s) resting with the authenticating entity. Tokens are only created for public/shared keys that are entitled. The authenticating entity defines the validity for the tokens for a certain time frame, i.e. the authentication process is passed upon presenting a token that is valid at the given time. The created tokens are each encrypted with the associated public/shared key (300) and rest in encrypted format with the authenticating entity. The tokens also rest in unencrypted form, where, however, any information about which public/shared key was used to encrypt which of the unencrypted tokens is immediately removed upon termination of the encryption process. By choosing the validity of the tokens in a future time window, i.e. after the termination of the encryption process, all information about which public/shared key was used to encrypt which valid token has vanished by the time the token is used. Thus, a connecting entity presenting a valid token cannot be identified, as it is no longer possible to infer which token was shared with which entity. In order to prevent a known plaintext attack on the encrypted tokens, i.e. encrypting all tokens with all keys to tie an unencrypted token to the corresponding public/shared key, randomized encryption should be used. Such procedures are well known and are not further explained here. This prevents known plaintext attacks and makes loss of the knowledge about the relationship of unencrypted access token and shared/public key irreversible.

Reference is made to Fig. 4, in which the authenticating entity requests access to the service and is thus required to pass the authentication process, but is not yet in possession of a token that is valid at the given time. Therefore, the connecting entity requests the encrypted token associated with a public/shared key, where the connecting entity is in possession of the corresponding private/secret key (400). The authenticating entity returns **(401)** the valid token at the given time associated with the presented public/shared key in encrypted format. The authenticating entity holds on to a set of encrypted tokens **(402)** for each key, each of them valid during a certain time window. The authenticating entity also holds on to the same tokens in unencrypted form (403), where, however, the authenticating entity does not know which decrypted token corresponds to which public/shared key, as denoted by (404).

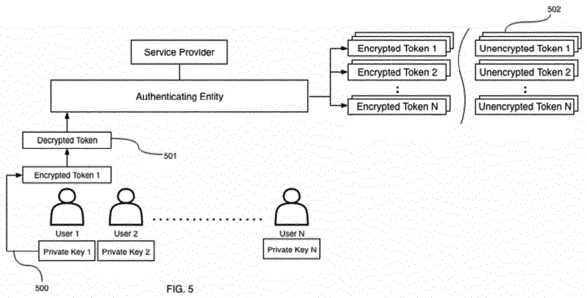

Reference is made to Fig. 5, which shows the connecting entity decrypting a token using a private/secret key that rests with the connecting entity (500). The decrypted token is sent to the authenticating entity (501), which checks validity of the decrypted token by comparing the token to the set of unencrypted tokens at the given time (502). Upon sending a decrypted valid token, the user is granted access to the service. To prevent abuse of a single valid token, it is possible to limit the number of times a single valid token may be used to pass the authentication procedure during a given time frame. This allows protecting against fraud, without the need to disclose any of the connecting entity's ground truth.

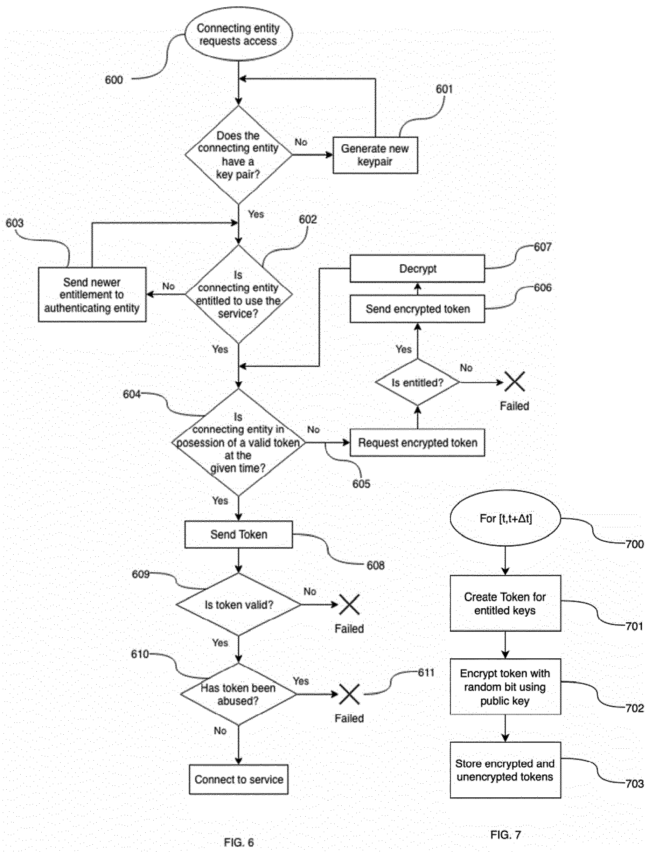

Reference is made to Fig. 6, which shows a flowchart of a sample initial request to using a service of a connecting entity up to the successful completion of the authentication procedure. The connecting entity initiates a request (600). If the connecting entity is not in possession of a key pair, it generates a key pair (601). If the connecting entity has not shared an entitlement with the authenticating entity (602), it sends a valid entitlement to the authenticating entity (603). In order to pass the authentication process, a valid token at the given time is required (604). If the connecting entity is not in possession of a valid token at the given time, it requests the encrypted valid token for the given time from the authenticating entity (605). If the public/shared key is entitled, the authenticating entity returns the encrypted token (606) which is then decrypted by the connecting entity (607). The connecting entity then sends the token (608) and passes the authentication process if the token is valid (609) and has not been abused (610). If any of the above mentioned is not performed as intended, e.g. a connecting entity is not entitled, the access is denied (611).

Reference is made to Fig. 7, which is a flow chart, showing the process of creating and encrypting the tokens. Independent of any requests made by any connecting entities, the authenticating entity, periodically (700) creates one or more token(s) for each entitled public/shared key resting with the authenticating entity (701). These token(s) are valid during a certain time frame, preferably in the future. Upon creation of the token(s) these are encrypted using the associated public/shared key(s) (702) and the unencrypted version is stored together with the time frame of the validity of the tokens and the encrypted versions are stored together with the public/shared key used for the encryption (703).

The preferred embodiment is a simple sample embodiment of the invention. Note that a few changes to the mentioned embodiment might be incorporated in an application of the invention for various reasons, such as but not limited to performance or security reasons.

For example, what has been referred to as the authenticating entity may actually be multiple, separated and connected entities each fulfilling all or a subset of the tasks of the authenticating entity as described above. For example, the authenticating entity tests entitlement of connecting entity and itself authenticates the connecting entity to the service provider instead of itself delivering the service. Even the authenticating process may be split into multiple separate parts. For example, the part of the entity that periodically encrypts the access tokens may be separate from the part that handles requests from connecting entities. Or, for example, the tokens may be stored on a different entity than the one that handles the requests from the connecting entities. The entity handling the user request then requests the token from the other entity itself. There may even be, for example, multiple entities, collectively handling requests from connecting entities. Thus the "authenticating entity", "service provider", and "connecting entity" mentioned in the preferred embodiment are merely a concept and do not imply anything about their realizations on computer hardware and the interconnection between this computer hardware.

The present invention may be operated as part of a computer program installed on a device, using a hardware processor. This device may communicate, to other devices, using the present invention. All communicating parties may also be on the same physical hardware, using the same hardware processor. Furthermore, the present invention may also be executed locally or decentralized (e.g., in a browser / on a web server). The communications between the computer systems may be accomplished via various methods, such as but not limited to wireless, ethernet, cable, direct connection, telephone lines, and satellite. One or more web servers typically provide the data to the computer systems connected via the Internet. The present invention may also be utilized upon global computer networks, local area networks (LAN), wide area networks (WAN), campus area networks (CAN), metropolitan area networks (MAN), and home area networks (HAN). The electronic devices may utilize various protocols for communications, such as but not limited to HTTP, SMTP, FTP and WAP. The present invention may be implemented upon various wireless networks, such as but not limited to CDPD, CDMA, GSM, PDC, PHS, TDMA, FLEX, REFLEX, IDEN, TETRA, DECT, DATATAC, and MOBITEX. The present invention may also be utilized with online services and internet service providers. The present invention preferably utilizes the Internet for transmitting data, however, it can be appreciated that as future technologies are created that various aspects of the invention may be practiced with these improved technologies.

## Claims

1. A method of providing an entitlement of one or more first entities by one or more second entities, wherein the first entities are each in possession of a set of keys of an asymmetric encryption method (100), wherein
- a message encrypted (300) by a first subset of the set of keys can be decrypted (500) in using a decryption set of keys consisting of at least one, preferably all, of the keys of the set of keys exclusive those of the first subset,
- the second entities are each provided with
-- a set of service entitlements, each service entitlement comprising a first subset of a set of keys and an encrypted entitlement token (402) encrypted using the first subset of keys, and
-- a set of unencrypted entitlement tokens (400), the unencrypted entitlement tokens having been encrypted by one of the first subsets of keys to yield the encrypted entitlement tokens, the one of the first subsets of keys and the encrypted entitlement token being comprised in a service entitlement, and
- wherein all entities comprise a computer device which executes the method steps under the control of a computer program and the entities are interconnected by a computer network,
the method comprising the steps:
- any information about which first subset of a set of keys was used to encrypt which unencrypted entitlement token is immediately removed upon termination of the encryption process;
- a requesting first entity provides the first subset of keys of its set of keys to a requested second entity (200);
- the requested second entity searches the set of service entitlements for the first subset of keys (400), and if found sends the encrypted entitlement token to the requesting first entity (401), in order to provide the requesting first entity with an encrypted entitlement token capable to be decrypted by at least one decryption key comprised in the set of keys the first entity is in possession of
- the requesting first entity decrypts the encrypted entitlement token (402) and sends the decrypted entitlement token (501) back to the requested second entity in order to be entitled to use a service provided by the second entity for which the entitlement token (403) constitutes the entitlement.

2. The method of claim 1, wherein the entitlement tokens (403) are valid for a predefined period of time.

3. The method of claim 2, wherein the entitlement tokens (403) are created before the period of time the entitlement tokens are valid for starts.

4. The method of claim 2, wherein the entitlement tokens (403) are created while the period of time the entitlement tokens are valid for is running.

5. The method of one of claims 1 to 4, wherein the decrypted entitlement token (403) comprises the actual entitlement token required by a requested second entity and at least a set of further data, preferably arbitrarily determined data.

## Patentansprüche

1. Verfahren zum Bereitstellen einer Berechtigung einer oder mehrerer erster Entitäten durch eine oder mehrere zweite Entitäten, wobei die ersten Entitäten jeweils im Besitz eines Satzes von Schlüsseln eines asymmetrischen Verschlüsselungsverfahrens (100) sind, wobei
- eine Nachricht, die durch eine erste Teilmenge des Satzes von Schlüsseln verschlüsselt (300) ist, unter Verwendung eines Entschlüsselungssatzes von Schlüsseln entschlüsselt (500) werden kann, der aus mindestens einem, vorzugsweise allen, der Schlüssel des Satzes von Schlüsseln ausschließlich derjenigen der ersten Teilmenge besteht,
- die zweiten Entitäten jeweils versehen sind mit
-- einem Satz von Dienstberechtigungen, wobei jede Dienstberechtigung eine erste Teilmenge eines Satzes von Schlüsseln und ein verschlüsseltes Berechtigungstoken (402) umfasst, das unter Verwendung der ersten Teilmenge von Schlüsseln verschlüsselt ist, und
-- einem Satz von unverschlüsselten Berechtigungstoken (400), wobei die unverschlüsselten Berechtigungstoken durch eine der ersten Teilmengen von Schlüsseln verschlüsselt worden sind, um die verschlüsselten Berechtigungstoken zu ergeben, wobei die eine der ersten Teilmengen von Schlüsseln und das verschlüsselte Berechtigungstoken in einer Dienstberechtigung enthalten sind, und
- wobei alle Entitäten eine Computervorrichtung umfassen, welche die Verfahrensschritte unter der Steuerung eines Computerprogramms ausführt, und die Entitäten durch ein Computernetzwerk miteinander verbunden sind,
wobei das Verfahren die Schritte umfasst:
- jegliche Information darüber, welche erste Teilmenge eines Satzes von Schlüsseln verwendet wurde, um welches unverschlüsseltes Berechtigungstoken zu verschlüsseln, wird bei Beendigung des Verschlüsselungsprozesses unverzüglich entfernt;
- eine anfragende erste Entität überstellt die erste Teilmenge von Schlüsseln ihres Satzes von Schlüsseln einer angefragten zweiten Entität (200);
- die angefragte zweite Entität durchsucht den Satz von Dienstberechtigungen nach der ersten Teilmenge von Schlüsseln (400) und sendet, falls gefunden, das verschlüsselte Berechtigungstoken an die anfragende erste Entität (401), um die anfragende erste Entität mit einem verschlüsselten Berechtigungstoken zu versehen, das durch mindestens einen Entschlüsselungsschlüssel entschlüsselbar ist, der in dem Satz von Schlüsseln enthalten ist, in dessen Besitz die erste Entität ist,
- die anfragende erste Entität entschlüsselt das verschlüsselte Berechtigungstoken (402) und sendet das entschlüsselte Berechtigungstoken (501) zurück an die angefragte zweite Entität, um berechtigt zu sein, einen Dienst zu nutzen, der von der zweiten Entität bereitgestellt wird, für den das Berechtigungstoken (403) die Berechtigung darstellt.

2. Verfahren nach Anspruch 1, wobei die Berechtigungstoken (403) für einen vorbestimmten Zeitraum gültig sind.

3. Verfahren nach Anspruch 2, wobei die Berechtigungstoken (403) erstellt werden, bevor der Zeitraum, für den die Berechtigungstoken gültig sind, beginnt.

4. Verfahren nach Anspruch 2, wobei die Berechtigungstoken (403) erstellt werden, während der Zeitraum, für den die Berechtigungstoken gültig sind, läuft.

5. Verfahren nach einem der Ansprüche 1 bis 4, wobei das entschlüsselte Berechtigungstoken (403) das eigentliche Berechtigungstoken, das von einer angefragten zweiten Entität benötigt wird, und mindestens einen Satz von weiteren Daten, vorzugsweise beliebig bestimmten Daten, umfasst.

## Revendications

1. Procédé d'approvisionnement en une habilitation d'une ou de plusieurs premières entités par une ou plusieurs deuxièmes entités, où les premières entités sont chacune en possession d'un ensemble de clés d'un procédé de chiffrement asymétrique (100), dans lequel
- un message chiffré (300) par un premier sous-ensemble de l'ensemble de clés peut être déchiffré (500) en utilisant un ensemble de clés de déchiffrement constitué d'au moins une, de préférence de toutes, des clés de l'ensemble de clés à l'exclusion de celles du premier sous-ensemble,
- les deuxièmes entités sont chacune pourvues
-- d'un ensemble d'habilitations de service, chaque habilitation de service comprenant un premier sous-ensemble d'un ensemble de clés et un jeton d'habilitation chiffré (402) chiffré en utilisant le premier sous-ensemble de clés, et
-- d'un ensemble de jetons d'habilitation non chiffrés (400), les jetons d'habilitation non chiffrés ayant été chiffrés par l'un des premiers sous-ensembles de clés pour produire les jetons d'habilitation chiffrés, ledit un des premiers sous-ensembles de clés et le jeton d'habilitation chiffré étant compris dans une habilitation de service, et
- où toutes les entités comprennent un dispositif informatique qui exécute les étapes du procédé sous la commande d'un programme informatique et les entités sont interconnectées par un réseau informatique,
le procédé comprenant les étapes suivantes :
- toute information concernant quel premier sous-ensemble d'un ensemble de clés a été utilisé pour chiffrer quel jeton d'habilitation non chiffré est immédiatement supprimée à la fin du processus de chiffrement ;
- une première entité requérante fournit le premier sous-ensemble de clés de son ensemble de clés à une deuxième entité sollicitée (200) ;
- la deuxième entité sollicitée recherche dans l'ensemble d'habilitations de service le premier sous-ensemble de clés (400) et, s'il est trouvé, envoie le jeton d'habilitation chiffré à la première entité requérante (401), afin de pourvoir la première entité requérante d'un jeton d'habilitation chiffré apte à être déchiffré par au moins une clé de déchiffrement comprise dans l'ensemble de clés dont la première entité est en possession,
- la première entité requérante déchiffre le jeton d'habilitation chiffré (402) et renvoie le jeton d'habilitation déchiffré (501) à la deuxième entité sollicitée afin d'être habilitée à utiliser un service fourni par la deuxième entité pour lequel le jeton d'habilitation (403) constitue l'habilitation.

2. Procédé selon la revendication 1, où les jetons d'habilitation (403) sont valides pour une période de temps prédéfinie.

3. Procédé selon la revendication 2, où les jetons d'habilitation (403) sont créés avant que la période de temps pour laquelle les jetons d'habilitation sont valides ne commence.

4. Procédé selon la revendication 2, où les jetons d'habilitation (403) sont créés pendant que la période de temps pour laquelle les jetons d'habilitation sont valides est en cours.

5. Procédé selon l'une quelconque des revendications 1 à 4, où le jeton d'habilitation déchiffré (403) comprend le jeton d'habilitation effectif requis par une deuxième entité sollicitée et au moins un ensemble de données supplémentaires, de préférence de données déterminées de manière arbitraire.
